# EUROPÄISCHE PATENTSCHRIFT

(11) **EP 3 074 251 B1**
(45) Veröffentlichungstag und Bekanntmachung des Hinweises auf die Patenterteilung: **02.10.2019**
(21) Anmeldenummer: 14793113.3
(22) Anmeldetag: 03.11.2014
(51) Int. Cl.: B60G 21/055, F16C 11/06, F16C 11/08

(54) **STABILISATORSYSTEM FÜR EIN KRAFTFAHRZEUG, VERFAHREN ZUR MONTAGE EINES STABILISATORSYSTEMS SOWIE FAHRWERK MIT STABILISATORSYSTEM**
STABILIZER SYSTEM FOR A MOTOR VEHICLE, METHOD OF MOUNTING A STABILIZER SYSTEM, AND CHASSIS WITH STABILIZER SYSTEM
SYSTÈME ANTI ROULIS POUR UN VEHICULE, MÉTHODE DE MONTAGE D'UN SYSTÈME ANTI-ROULIS, ET SYSTÈME CHASSIS AVEC LE SYSTÈME

(30) Priorität: 26.11.2013 DE 102013113066
(43) Veröffentlichungstag der Anmeldung: 05.10.2016
(73) Patentinhaber: THK Rhythm Automotive GmbH, 40233 Düsseldorf (DE)
(72) Erfinder: ERDOGAN, Cengiz, 47608 Geldern (DE)
(74) Vertreter: Prinz & Partner mbB
(86) Internationale Anmeldenummer: PCT/EP2014/073589
(87) Internationale Veröffentlichungsnummer: WO 2015/078663

(56) Entgegenhaltungen:
- DE-A1- 19 744 732
- DE-A1- 19 903 562
- DE-U1- 20 202 241
- US-A- 5 794 965
- US-A- 6 076 840

## Beschreibung

Die vorliegende Erfindung betrifft ein Stabilisatorsystem für ein Kraftfahrzeug nach dem Oberbegriff des Anspruchs 1, insbesondere ein Stabilisatorsystem für ein Nutzfahrzeug, ein Verfahren zur Montage eines Stabilisatorsystems sowie ein Fahrwerk eines Kraftfahrzeugs mit wenigstens einem Stabilisatorsystem.

Aus dem Stand der Technik sind bereits Stabilisatorsysteme für Kraftfahrzeuge bekannt, die eine Stabilisatorstrebe aufweisen und an beiden Enden der Stabilisatorstrebe mit einem Kugelgelenk versehen sind. Derartige Stabilisatorsysteme mit Kugelgelenken können unproblematisch montiert werden, da aufgrund der Kugelgelenke der im Kugelgelenk gelagerte Kugelzapfen, der in einem entsprechenden Gegenlager am Fahrwerk gelagert und aufgenommen wird, zur Montage ausgelenkt werden kann. Folglich ist es möglich, die Stabilisatorstrebe im Zusammenhang mit der Montage zunächst verkippt zwischen die beiden Gegenlager einzuführen und sodann die beiden Kugelzapfen entsprechend in die Gegenlager einzusetzen.

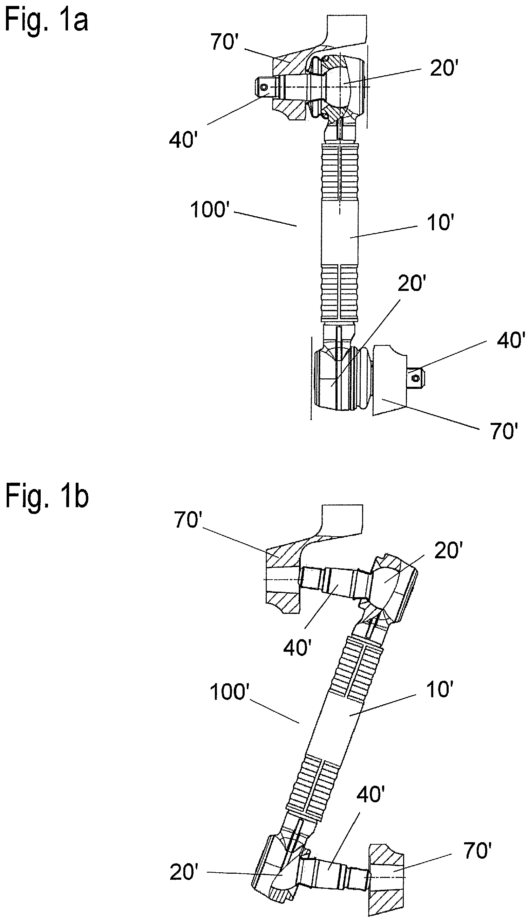

Ein entsprechendes Ausführungsbeispiel aus dem Stand der Technik eines Stabilisatorsystems ist in den Figuren 1a und 1b gezeigt, wobei das Stabilisatorsystem 100' eine Stabilisatorstrebe 10' und zwei in Kugelgelenken 20' gelagerte Kugelzapfen 40' aufweist. Wie dies in Figur 1b gezeigt ist, können diese beim verkippten Einführen der Stabilisatorstrebe zwischen die beiden Gegenlager 70' entsprechend ausgelenkten Kugelzapfen 40' derart ausgelenkt werden, dass sie ohne Probleme in die Gegenlager 70' eingeführt und dort befestigt werden können.

Eine derartige Konstruktion wie in den Figuren 1a und 1b gezeigt weist jedoch im Betrieb das Problem auf, dass es zu einer erhöhten Geräuschbildung an den Stabilisatorstreben durch zum Beispiel Schwingungen kommen kann, was jedoch unerwünscht ist.

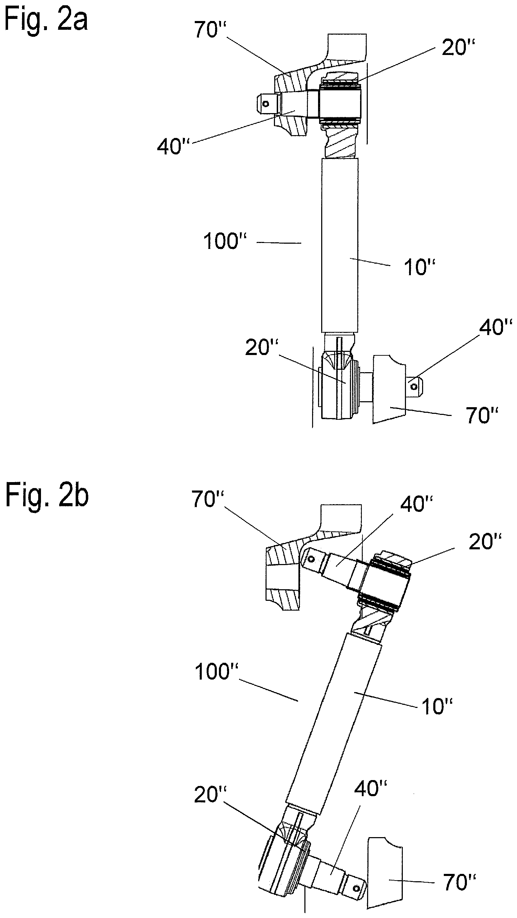

Um die Geräuschbildung zu vermindern, können beispielsweise Gummilager bzw. Elastomerlager eingesetzt werden, mit denen der vorgenannten Geräuschproblematik gut begegnet werden kann. Ein derartiges Elastomergelenk ist beispielsweise aus der DE 202 02 241 U1 bekannt. Dabei weist ein solches Elastomergelenk für Fahrwerksteile von Kraftfahrzeugen ein Gehäuse auf, in dem ein Elastomerkörper mit einem weiteren Gelenkkörper angeordnet ist. Derartige Elastomergelenke sind im Betrieb geräuscharm und zugleich sehr steif. Diese Steifigkeit von Elastomergelenken führt jedoch bei der Montage eines Stabilisatorsystems mit Elastomergelenken zu einem Montageproblem, das näher im Zusammenhang mit den Figuren 2a und 2b erläutert wird. Das dort gezeigte Stabilisatorsystem 100" weist dabei eine Stabilisatorstrebe 10" mit Elastomergelenken 20" auf, die an beiden Enden der Stabilisatorstrebe 10" angeordnet sind. In den Elastomergelenken 20" sind einteilige Befestigungszapfen 40" aufgenommen, die entsprechend in Gegenlager 70" befestigt werden sollen. Aufgrund der Steifigkeit der Elastomergelenke 20" kommt es zu Problemen bei der Montage, da sich die Befestigungszapfen 40" zur Montage nicht von Hand auslenken lassen, wie dies insbesondere aus Figur 2b gut ersichtlich ist.

Eine Vorrichtung zum Anlenken eines Stabilisatorarmes eines Stabilisators an einem Lenker einer Radaufhängung eines Kraftfahrzeugs mit einem gattungsgemäßen Stabilisatorsystem ist in der DE 197 44 732 A1 gezeigt.

Die DE 199 03 562 A1 zeigt eine Radaufhängung mit zwei Endgelenken zum Verbinden der beiden Enden eines Stabilisators mit zwei Radaufhängungsteilen. Der Stabilisator weist einen Mittelabschnitt und Armabschnitte an jedem seiner Enden auf. Dabei sind die Armabschnitte jeweils mittels eines gattungsgemäßen Stabilisatorsystems mit den Radaufhängungsteilen verbunden.

Ferner zeigen die US 6 076 840 A und die US 5 794 965 A ein gattungsgemäßes Stabilisatorsystem beziehungsweise ein Stabilisatorsystem mit einem Befestigungszapfen, der einen konisch ausgebildeten Befestigungsansatz aufweist, der im entsprechenden Gegenlager am Kraftfahrzeug aufgenommen ist.

Es ist daher die Aufgabe der vorliegenden Erfindung, ein Stabilisatorsystem, ein Verfahren zur Montage eines Stabilisatorsystems sowie ein Fahrwerk eines Kraftfahrzeugs der eingangs genannten Art in vorteilhafter Weise weiterzubilden, insbesondere dahingehend, dass die Montage des Stabilisatorsystems vereinfacht werden kann.

Diese Aufgabe wird erfindungsgemäß gelöst durch ein Stabilisatorsystem mit den Merkmalen des Anspruchs 1.

Das Stabilisatorsystem kann insbesondere das Stabilisatorsystem für ein Nutzfahrzeug sein.

Das Elastomergelenk ist insbesondere ein Elastomergelenk für Fahrwerksteile von Kraftfahrzeugen und weist vorzugsweise ein Gehäuse auf, in dem wenigstens ein im Gehäuse angeordneter Elastomerkörper vorgesehen ist. In diesem Elastomergelenk ist beispielsweise die vom Elastomerkörper nahezu vollständig umschlossene Aufnahmebuchse derart angeordnet, dass in diese Aufnahmebuchse der Befestigungszapfen des Stabilisatorsystems eingesetzt werden kann. Die Befestigungszapfen wiederum sind dafür vorgesehen, in einem entsprechenden Gegenlager am Kraftfahrzeug bzw. einem Fahrwerksteil eines Fahrwerks eines Kraftfahrzeugs aufgenommen und dort befestigt zu werden.

Darüber hinaus weist die Aufnahmebuchse zumindest eine zumindest teilweise konische Aufnahme zur Aufnahme des Befestigungszapfens auf.

Außerdem ist in der teilweise konische Aufnahme der Aufnahmebuchse der Befestigungszapfen mit einem entsprechenden konischen Gegenstück einsetzbar.

Durch die erfindungsgemäße Ausgestaltung des vorgenannten Stabilisatorsystems ergibt sich insbesondere der Vorteil, dass die Montage des Stabilisatorsystems deutlich vereinfacht wird, da aufgrund der zweiteiligen Ausführung von Befestigungszapfen und Aufnahmebuchse ein starkes Verkippen des Zapfens bei der Montage verhindert werden kann. Dies ermöglicht vorteilhafterweise eine leichtere und schnellere Montage. Darüber hinaus erlaubt der Einsatz des Elastomergelenks im Vergleich zu einem herkömmlichen Kugelgelenk einen geräuschärmeren Fahrbetrieb, da aufgrund der Konstruktion des Elastomergelenks keine störenden Frequenzen in Form von Vibration und Geräuschen beispielsweise aus dem Antriebsstrang auf die Fahrgastzelle übertragen werden können.

Der Einsatz von konischen Aufnahmen erlaubt eine einfache Montage und erleichtert den verkippten Einbau bzw. das verkippte Einführen der Stabilisatorstrebe und das Auffädeln auf zum Beispiel die vormontierten Befestigungszapfen. Hier ist insbesondere von Vorteil, dass die konischen Aufnahmen und die entsprechenden konischen Gegenstücke infolge der entsprechenden Abschrägung trotz starkem Verkippen der Stabilisatorstrebe es erlauben, beide Aufnahmebuchsen im Wesentlichen gleichzeitig auf die Befestigungszapfen mit den entsprechenden konischen Gegenstücken aufzusetzen und sodann für die Befestigung aufzuschieben. Außerdem lassen sich Befestigungszapfen und Aufnahme mit geringem Aufwand so gegeneinander verspannen, dass der Befestigungszapfen spielfrei in der Aufnahme aufgenommen ist.

Des Weiteren kann vorgesehen sein, dass die Stabilisatorstrebe zwei Enden aufweist, wobei im Bereich beider Enden jeweils ein Elastomergelenk angeordnet ist, wobei im Inneren eines Elastomergelenks jeweils eine Aufnahmebuchse angeordnet ist, in der jeweils ein Befestigungszapfen angebracht ist. Dadurch ergibt sich insbesondere der Vorteil, dass bei einer notwendigen Befestigung der Stabilisatorstrebe an beiden Enden jeweils die geräuscharmen Elastomergelenke eingesetzt werden können und es trotzdem einfach möglich ist, die Stabilisatorstrebe beispielsweise auf die vormontierten Befestigungszapfen entsprechend aufzufädeln und sodann zu befestigen.

Des Weiteren ist denkbar, dass die konische Aufnahme an eine zylindrische Aufnahme anschließt, durch die ein Befestigungselement, insbesondere ein Befestigungsbolzen oder eine Befestigungsschraube, derart erstreckt, insbesondere in ein Gewinde im Befestigungszapfen eingeschraubt ist, dass der Befestigungszapfen und die Aufnahmebuchse miteinander verbunden sind. Dies ermöglicht, den Befestigungszapfen lösbar und somit austauschbar an der Stabilisatorstrebe anzubringen.

Insbesondere ist denkbar, die zylindrische Aufnahme und die konische Aufnahme koaxial ausgeführt sind.

Außerdem ist möglich, dass der Befestigungszapfen wenigstens einen konisch ausgebildeten Befestigungsansatz aufweist, wobei der Befestigungsansatz zum Einsatz in einem entsprechenden Gegenlager am Kraftfahrzeug aufgenommen ist. Mittels des konischen Befestigungsansatzes kann der Befestigungszapfen mit geringem Aufwand spielfrei am Fahrzeug montiert werden.

Des Weiteren betrifft die vorliegende Erfindung ein Verfahren zur Montage eines Stabilisatorsystems mit den Merkmalen des Anspruchs 7. Danach ist vorgesehen, dass zur Montage eines Stabilisatorsystems nach einem der Ansprüche 1 bis 6 der wenigstens eine Befestigungszapfen im Gegenlager am Kraftfahrzeug und die Stabilisatorstrebe mit wenigstens einem Elastomergelenk und mit wenigstens einer Aufnahmebuchse vormontiert wird und sodann die Aufnahmebuchse auf den Befestigungszapfen aufgeschoben wird. Hinsichtlich der sich ergebenden Vorteile wird auf die obigen Erläuterungen verwiesen.

Darüber hinaus betrifft die vorliegende Erfindung ein Fahrwerk mit den Merkmalen des Anspruchs 8. Danach ist vorgesehen, dass ein Fahrwerk eines Kraftfahrzeugs mit wenigstens einem Stabilisatorsystem nach einem der Ansprüche 1 bis 6 ausgeführt wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1a ein Stabilisatorsystem aus dem Stand der Technik im montierten Einbau;
- Figur 1b das Stabilisatorsystem gemäß Figur 1a während der Montage;
- Figur 2a ein Stabilisatorsystem aus dem Stand der Technik mit einem Elastomergelenk und einteilig ausgeführten Befestigungszapfen im eingebauten Zustand;
- Figur 2b das Stabilisatorsystem gemäß Figur 2a während der Montage;
- Figur 3a ein erfindungsgemäßes Stabilisatorsystem im Zusammenhang mit einem erfindungsgemäßen Fahrwerk eines Kraftfahrzeugs im eingebauten Zustand; und
- Figur 3b das erfindungsgemäße Verfahren zur Montage des Stabilisatorsystems gemäß Figur 3a.

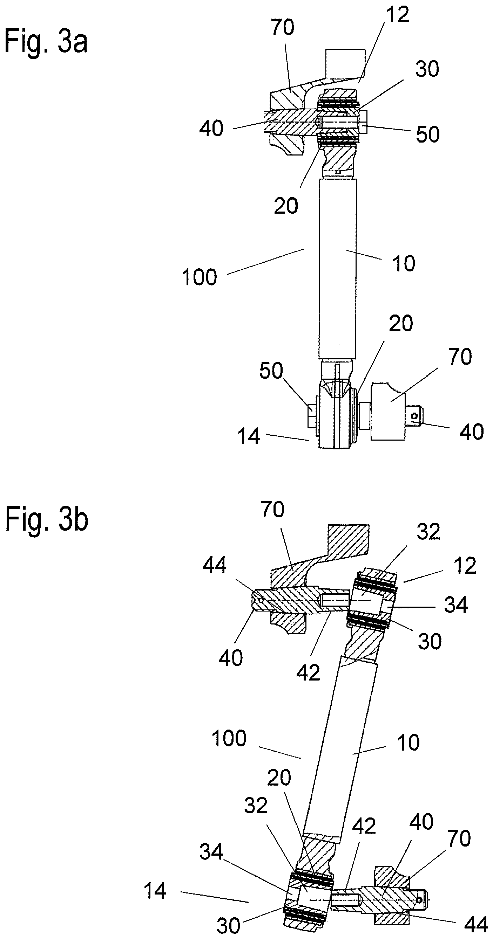

Wie in Figur 3a gezeigt ist, weist das erfindungsgemäße Stabilisatorsystem für ein Kraftfahrzeug eine Stabilisatorstrebe 10 auf, die mit einem Elastomergelenk 20 an beiden Enden 12, 14 der Stabilisatorstrebe 10 versehen ist. Dabei ist jeweils im Inneren eines Elastomergelenks 20 jeweils eine Aufnahmebuchse 30 angeordnet, in der jeweils ein Befestigungszapfen 40 angebracht ist.

Die Aufnahmebuchse 30 weist dabei jeweils eine konische Aufnahme 32 auf, die zur Aufnahme des Befestigungszapfens 40 dient. Hierzu weist der Befestigungszapfen als entsprechendes Gegenstück ein konisches Gegenstück 42 auf, das in die konische Aufnahme 32 der Aufnahmebuchse 30 einsetzbar ist bzw. eingesetzt ist, wie dies in Figur 3a gezeigt ist.

An die konische Aufnahme 32 schließt eine zylindrische Aufnahme 34 an, wie dies näher aus Figur 3b ersichtlich ist, wobei durch die zylindrische Aufnahme 34 eine Befestigungsschraube 50 derart eingeschraubt werden kann, dass der Befestigungszapfen 40 mit der Aufnahmebuchse 30 verschraubt werden kann.

Somit ist der Befestigungszapfen lösbar mit der Aufnahmebuchse 30 und damit auch mit der Stabilisatorstrebe 10 verbunden. Dies stellt die bevorzugte Variante dar. Es kann aber auch vorgesehen sein, dass der Befestigungszapfen, nachdem er in die Aufnahmebuchse 30 eingesetzt ist, unlösbar mit dieser verbunden wird, beispielsweise verschweißt.

Der Befestigungszapfen 40 weist am entgegengesetzten Ende zum konischen Gegenstück 42 einen konisch ausgebildeten Befestigungsansatz 44 auf, wobei dieser Befestigungsansatz 44 zum Einsatz in ein entsprechendes Gegenlager 70 am Kraftfahrzeug vorgesehen ist.

Wie dies insbesondere aus Figur 3b ersichtlich ist, wird bei der Montage des Stabilisatorsystems 100 zunächst derart vorgegangen, dass die Befestigungszapfen 40 mit ihren konisch ausgebildeten Befestigungsansätzen 44 in die entsprechenden Gegenlager 70 eingesetzt werden und somit entsprechend vormontiert sind.

In einem weiteren Schritt werden die Stabilisatorstrebe und die beiden Elastomerkgelenke, wobei in den Elastomergelenken jeweils bereits die Aufnahmebuchse 30 vormontiert ist, zu einer Einheit zusammengebaut.

Es ist ersichtlich, dass es auf die Reihenfolge der Vormontage von Befestigungszapfen 40 am Fahrzeug einerseits und Stabilisatorstrebe 10 andererseits nicht ankommt; wichtig ist, dass die Befestigungszapfen am Fahrzeug montiert sind, bevor die Stabilisatorstrebe am Fahrzeug angebracht wird.

Zur Montage wird die Stabilisatorstrebe 10 verkippt auf die beiden Befestigungszapfen 40, hier insbesondere auf die beiden konischen Gegenstücke 42, aufgefädelt. Hierzu wird die konische Aufnahme 32 der Aufnahmebuchse 30 jeweils auf das entsprechende konische Gegenstück 42 aufgesetzt bzw. aufgeschoben.

Nach dem Aufschieben wird sodann die Aufnahmebuchse 30 mit dem Befestigungszapfen 40 fest verbunden, indem die Befestigungsschrauben 50 an jeweils beiden Enden 12, 14 der Stabilisatorstrebe in den Befestigungszapfen 40 eingeschraubt wird. Dadurch wird der Befestigungszapfen fest innerhalb der konischen Aufnahme 32 der Aufnahmebuchse 30 verspannt.

Durch die Ausgestaltung des vorstehend beschriebene erfindungsgemäßen Ausführungsbeispiels eines Stabilisatorsystems 100 ergibt sich insbesondere der Vorteil, dass die Montage des Stabilisatorsystems 100 deutlich vereinfacht wird (vgl. Figur 3b), da aufgrund der zweiteiligen Ausführung von Befestigungszapfen 40 und Aufnahmebuchse 30 ein starkes Verkippen des Befestigungszapfens 40 bei der Montage verhindert werden kann (vgl. hierzu z.B. Stand der Technik gemäß Figur 2b und Figur 3b). Dies ermöglicht vorteilhafterweise eine leichtere und schnellere Montage. Darüber hinaus erlaubt der Einsatz des Elastomergelenks 20 im Vergleich zu einem herkömmlichen Kugelgelenk (vgl. Ausführungsbeispiel aus dem Stand der Technik gemäß Figuren 1a und 1b) einen geräuschärmeren Fahrbetrieb, da aufgrund der Konstruktion des Elastomergelenks keine störenden Frequenzen in Form von Vibration und Geräuschen beispielsweise aus dem Antriebsstrang auf die Fahrgastzelle übertragen werden können.

## Patentansprüche

1. Stabilisatorsystem (100) für ein Kraftfahrzeug, insbesondere für ein Nutzfahrzeug, mit wenigstens einer Stabilisatorstrebe (10), wenigstens einem Elastomergelenk (20), wenigstens einer Aufnahmebuchse (30) und wenigstens einem Befestigungszapfen (40), wobei das Elastomergelenk (20) im Bereich eines Endes (12) der Stabilisatorstrebe (10) angeordnet ist und wobei im Inneren des Elastomergelenks (20) die Aufnahmebuchse (30) angeordnet ist, in welcher der Befestigungszapfen (40) angebracht ist, wobei die Aufnahmebuchse (30) zumindest eine zumindest teilweise konische Aufnahme (32) für den Befestigungszapfen (40) aufweist, **dadurch gekennzeichnet, dass** in der teilweise konischen Aufnahme (32) der Aufnahmebuchse (30) der Befestigungszapfen (40) mit einem entsprechenden konischen Gegenstück (42) eingesetzt ist.

2. Stabilisatorsystem (100) nach Anspruch 1, **dadurch gekennzeichnet, dass** die Stabilisatorstrebe (10) zwei Enden (12, 14) aufweist, wobei im Bereich beider Enden (12, 14) jeweils ein Elastomergelenk (20) angeordnet ist, wobei im Inneren der Elastomergelenke (20) jeweils eine Aufnahmebuchse (30) angeordnet ist, in der jeweils ein Befestigungszapfen (40) angebracht ist.

3. Stabilisatorsystem (100) nach Anspruch 1 oder 2, **dadurch gekennzeichnet, dass** die konische Aufnahme (32) an eine zylindrische Aufnahme (34) anschließt, durch die sich ein Befestigungselement, insbesondere ein Befestigungsbolzen oder eine Befestigungsschraube (50), derart erstreckt, dass der Befestigungszapfen (40) und die Aufnahmebuchse (30) miteinander verbunden sind.

4. Stabilisatorsystem (100) nach einem der vorhergehenden Ansprüche, **dadurch gekennzeichnet, dass** der Befestigungszapfen (40) wenigstens einen konisch ausgebildeten Befestigungsansatz (44) aufweist, der in einem entsprechenden Gegenlager (70) am Kraftfahrzeug aufgenommen ist.

5. Verfahren zur Montage eines Stabilisatorsystems (100) nach einem der vorhergehenden Ansprüche, wobei der wenigstens eine Befestigungszapfen (40) im Gegenlager (70) am Kraftfahrzeug und die Stabilisatorstrebe (10) mit wenigstens einem Elastomergelenk (20) und mit wenigstens einer Aufnahmebuchse (30) vormontiert wird und sodann die Aufnahmebuchse (30) auf den Befestigungszapfen (40) aufgeschoben wird.

6. Fahrwerk eines Kraftfahrzeuges mit wenigstens einem Stabilisatorsystem (100) nach einem der Ansprüche 1 bis 4.

## Claims

1. A stabilizer system (100) for a motor vehicle, in particular for a utility vehicle, comprising at least one stabilizer strut (10), at least one elastomeric joint (20), at least one receiving bushing (30), and at least one fastening stud (40), wherein the elastomeric joint (20) is arranged in the region of an end (12) of the stabilizer strut (10), and wherein the receiving bushing (30) is arranged in the interior of the elastomeric joint (20), the fastening stud (40) being mounted in the receiving bushing (30), wherein the receiving bushing (30) includes at least one at least partly conical seat (32) for the fastening stud (40), **characterized in that** a corresponding conical counterpart (42) of the fastening stud (40) is inserted in the partly conical seat (32) of the receiving bushing (30).

2. The stabilizer system (100) according to claim 1, **characterized in that** the stabilizer strut (10) has two ends (12, 14), a respective elastomeric joint (20) being arranged in the region of each of the two ends (12, 14), a respective receiving bushing (30) being arranged in the interior of each of the elastomeric joints (20), a respective fastening stud (40) being mounted in each receiving bushing (30).

3. The stabilizer system (100) according to claim 1 or 2, **characterized in that** the conical seat (32) is adjoined by a cylindrical seat (34) through which a fastening element, in particular a fastening bolt or a fastening screw (50), extends such that the fastening stud (40) and the receiving bushing (30) are connected with each other.

4. The stabilizer system (100) according to any of the preceding claims, **characterized in that** the fastening stud (40) includes at least one conically shaped fastening extension (44) which is received in a corresponding counter-bearing (70) on the motor vehicle.

5. A method of assembling a stabilizer system (100) according to any of the preceding claims, wherein the at least one fastening stud (40) is preassembled in the counter-bearing (70) on the motor vehicle and the stabilizer strut (10) is preassembled with at least one elastomeric joint (20) and with at least one receiving bushing (30), and the receiving bushing (30) is then pushed onto the fastening stud (40).

6. A chassis of a motor vehicle comprising at least one stabilizer system (100) according to any of claims 1 to 4.

## Revendications

1. Système de stabilisateur (100) pour un véhicule automobile, en particulier pour un véhicule utilitaire, comprenant au moins une entretoise de stabilisateur (10), au moins un joint en élastomère (20), au moins une douille de réception (30), et au moins un tenon de fixation (40), le joint en élastomère (20) étant agencé dans la zone d'une extrémité (12) de l'entretoise de stabilisateur (10), et la douille de réception (30), dans laquelle le tenon de fixation (40) est monté, étant agencée à l'intérieur du joint en élastomère (20), la douille de réception (30) présentant au moins un logement (32) au moins partiellement conique pour le tenon de fixation (40), **caractérisé en ce qu'**une pièce antagoniste (42) conique correspondante du tenon de fixation (40) est insérée dans le logement (32) partiellement conique de la douille de réception (30).

2. Système de stabilisateur (100) selon la revendication 1, **caractérisé en ce que** l'entretoise de stabilisateur (10) présente deux extrémités (12, 14), un joint en élastomère (20) respectif étant agencé dans la zone des deux extrémités (12, 14), une douille de réception (30) respective, dans laquelle un tenon de fixation (40) respectif est monté, étant agencée à l'intérieur des joints en élastomère (20).

3. Système de stabilisateur (100) selon la revendication 1 ou 2, **caractérisé en ce que** le logement conique (32) est contigu à un logement cylindrique (34) à travers lequel un élément de fixation, en particulier un boulon de fixation ou une vis de fixation (50) s'étend de telle sorte que le tenon de fixation (40) et la douille de réception (30) sont liés l'un à l'autre.

4. Système de stabilisateur (100) selon l'une des revendications précédentes, **caractérisé en ce que** le tenon de fixation (40) présente au moins une saillie de fixation (44) qui est réalisée de manière conique et qui est reçue dans un contre-appui (70) correspondant sur le véhicule automobile.

5. Procédé de montage d'un système de stabilisateur (100) selon l'une des revendications précédentes, ledit au moins un tenon de fixation (40) étant préassemblé dans le contre-appui (70) sur le véhicule automobile, et l'entretoise de stabilisateur (10) étant préassemblée avec au moins un joint en élastomère (20) et avec au moins une douille de réception (30), et la douille de réception (30) étant ensuite poussée sur le tenon de fixation (40).

6. Châssis d'un véhicule automobile, comprenant au moins un système de stabilisateur (100) selon l'une des revendications 1 à 4.
